## Europäisches Patentamt
## European Patent Office
## Office européen des brevets

(19)

(11) Numéro de publication: **0 014 138**
**B1**

(12)   **FASCICULE DE BREVET EUROPEEN**

(45) Date de publication du fascicule du brevet: **25.05.83**

(51) Int. Cl.³: **G 01 M 1/04, B 23 B 31/14**

(21) Numéro de dépôt: **80400080.0**

(22) Date de dépôt: **18.01.80**

---

(54) **Dispositif pour la fixation des roues de véhicules sur une équilibreuse.**

---

(30) Priorité: **23.01.79 FR 7901591**

(43) Date de publication de la demande:
**06.08.80 Bulletin 80/16**

(45) Mention de la délivrance du brevet:
**25.05.83 Bulletin 83/21**

(84) Etats contractants désignés:
**AT BE CH DE GB IT LU NL SE**

(56) Documents cités:
**FR - A - 2 334 094**
**GB - A - 679 147**
**GB - A - 687 779**
**US - A - 2 349 626**

(73) Titulaire: **Etablissements M. Muller & Cie**
**50-56, rue des Tournelles**
**F-75140 Paris Cedex 03 (FR)**

(72) Inventeur: **Coetsier, Paul**
**4, Impasse Jean Macé**
**F-77500 Chelles (FR)**

(74) Mandataire: **Tony-Durand, Serge**
**Cabinet Tony-Durand 22, Boulevard Voltaire**
**F-75011 Paris (FR)**

---

Courier Press, Leamington Spa, England.

## Dispositif pour la fixation des roues de véhicules sur une équilibreuse

La présente invention a pour, objet un dispositif pour la fixation des roues de véhicules sur une équilibreuse, afin de procéder à leur équilibrage. Cette opération consiste comme on le sait, à fixer à la roue au moins une masselotte destinée à éviter un couple de basculement pendant la rotation de la roue.

Les machines d'équilibrage connues comportent un arbre rotatif logé dans le nez de l'équilibreuse, et qui est solidarisé avec un plateau équipé de boulons ou goujons destinés à venir s'engager dans la jante de la roue à équilibrer, des écrous de fixation de la roue sur le plateau étant prévus pour être vissés sur les goujons.

Dans certaines équilibreuses connues, le plateau est muni de supports mobiles en rotation, portant chacun un goujon de fixation ainsi qu'un tourillon traversant le plateau. Pour immobiliser la roue sur le plateau, il faut donc serrer sur la face avant du plateau une première série d'écrous sur les goujons des supports, puis serrer sur la face arrière une seconde série d'écrous sur les tourillons, afin de bloquer les supports sur le plateau, ces serrages devant être exécutés à la clé.

Or, les écrous de la face arrière sont très difficilement accessibles lorsque la roue est en place sur le plateau. La mise en place de la roue nécessite en outre deux manoeuvres au moyen d'une clé, qui sont relativement longues et exigent des efforts répétés de la part de l'opérateur. On connaît aussi, par le brevet GB—A 679 147, un dispositif pour centrer et fixer une pièce à usiner par une machine-outil, au moyen de l'effet de la mise en rotation du mécanisme de fixation—Mais ce dispositif concerne un domaine technique autre que celui visé par l'invention, c'est-à-dire l'équilibrage des roues de véhicules.

L'invention a pour but de remédier à ces inconvénients en réalisant un dispositif qui permette de fixer la roue à équilibrer par simple serrage manual des écrous, l'autoserrage et l'autocentrage étant obtenus automatiquement à la mise en route de l'équilibreuse.

Le dispositif selon l'invention, destiné à la fixation des roues de véhicules sur une équilibreuse pourvue d'un arbre rotatif, comporte un plateau équipé de goujons destinés à s'engager dans la jante de la roue à équilibrer, et des écrous de fixation de la roue adaptés pour être vissés sur les goujons.

Suivant l'invention, pour assurer automatiquement un autoserrage des écrous et un autocentrage de la roue après simple serrage manuel des écrous de fixation, et ce sous l'effet de la mise en rotation du plateau de fixation, le plateau comprend un disque coaxial à l'arbre rotatif et solidaire de celui-ci, une couronne entourant le disque et portant des manetons en nombre égal au nombre de goujons et de trous de la roue, articulés sur la couronne et aux extrémités de chacun desquels est fixé un goujon, les manetons étant reliés au disque central par des moyens d'entraînement réservant à ces manetons un degré de liberté en rotation par rapport au disque.

Ainsi la roue est maintenue en place avec ses écrous bloqués pendant toute l'opération d'équilibrage, et ce sans que l'opérateur n'ait à serrer au préalable les écrous au moyen d'une clé. En outre, le dispositif selon l'invention évite la contrainte d'avoir à serrer des écrous situés sur la face arrière du plateau.

D'autres particularités et avantages de l'invention apparaîtront au cours de la description qui va suivre. Aux dessins annexés, donnés à titre d'exemples non limitatifs, on a représenté trois formes de réalisation de l'invention.

— La figure 1 est une vue en élévation d'une forme de réalisation du dispositif de fixation d'une roue de véhicule suivant l'invention, la roue n'étant pas représentée.

— La figure 2 est une vue en coupe transversale suivant II—II de la figure 1, les écrous de fixation étant représentés en élévation, prêts à être engagés sur les goujons.

— La figure 3 est une vue en coupe partielle suivant III—III de la figure 1.

— La figure 4 est une vue en coupe axiale du dispositif de fixation selon l'invention, sur lequel est montée une roue de véhicule à équilibrer, avec les écrous de fixation incomplètement serrés, le jeu entre la jante et le plateau ayant été exagéré pour une meilleure commodité de la description.

— La figure 5 est une vue en coupe axiale analogue à la figure 4, montrant les écrous bloqués et la jante appliquée contre le dispositif selon l'invention, pendant la rotation du plateau.

— Les figures 6 et 7 sont des vues en élévation analogues à la figure 1 de deux variantes de réalisation du dispositif selon l'invention.

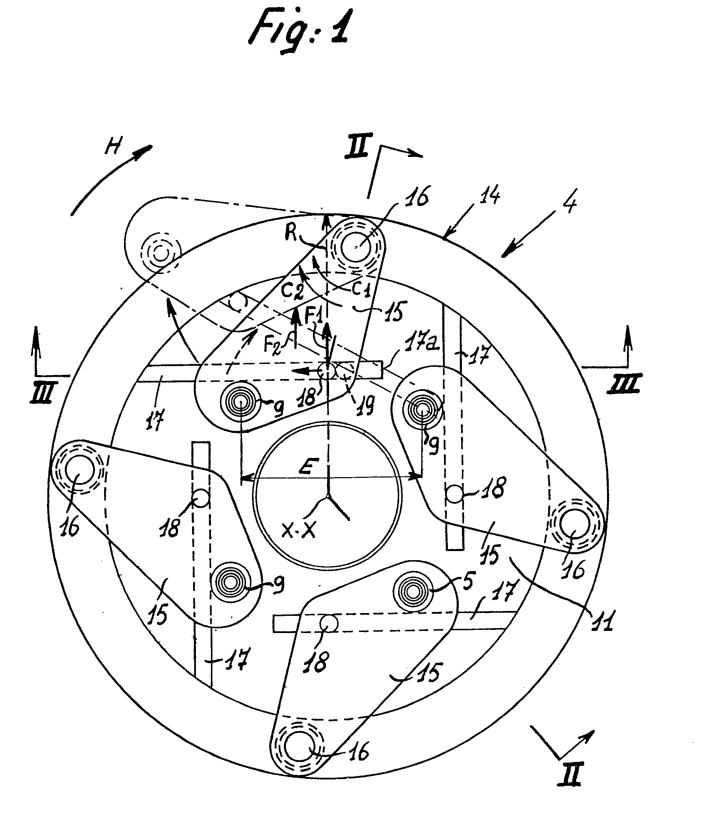

Le dispositif représenté aux figures 1 à 5 est destiné à la fixation d'une roue 1 de véhicule à équilibrer sur une équilibreuse présentant un nez 2 pourvu d'un arbre rotatif 3.

Le dispositif de fixation de la roue 1 comporte un plateau désigné par la référence générale 4, qui est équipé de plusieurs goujons 5 destinés à s'engager dans des trous correspondants 6 ménagés dans la jante 7 de la roue 1, cette jante étant entourée d'un pneumatique 8. Dans l'exemple représenté, le plateau est muni de quatre goujons 5 prévus pour s'engager dans quatre trous 6 de la jante 7, mais le nombre de trous de la jante et par conséquent de goujons peut varier en fonction du type de roue à équilibrer, celle-ci pouvant en effet présenter trois, quatre ou cinq trous.

Dans chaque cas, le plateau du dispositif de fixation est équipé du nombre correspondant de goujons.

Des écrous 9 peuvent être vissés sur les goujons 5 pour appliquer la jante 7 contre le plateau 4.

Conformément à l'invention, le dispositif comprend des moyens pour assurer automatiquement un autoserrage des écrous 9 sur la jante 7 et au autocentrage de la roue 1 après simple serrage manuel des écrous de fixation 9 sur les goujons associés 5, et ce sous l'effet de la mise en rotation du plateau de fixation.

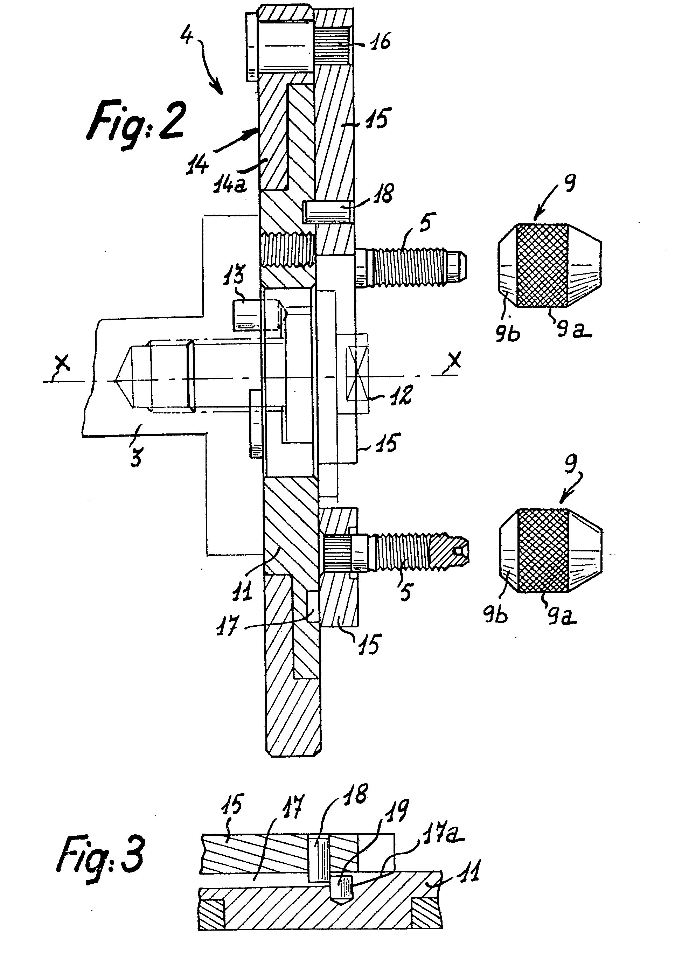

Dans l'exemple de réalisation représenté, ces moyens sont constitués de la manière suivante. Le plateau 4 comprend un disque 11 coaxial à l'arbre rotatif 3 et rendu solidaire de celui-ci de façon connue en soi, au moyen d'une vis 12 (figure 2) traversant axialement le disque 11 et l'arbre 3. La fixation du disque 11 à l'arbre 3 est complétée par une série d'ergots dont l'un 13 est visible à la figure 2, et qui sont logés dans des trous du disque 11 et de l'arbre 3. Les ergots 13 servent exclusivement à l'entraînement du disque 11 en rotation.

Le plateau 4 prévu par l'invention comprend en outre une couronne 14 emboîtée autour du disque 11, grâce à une collerette intérieure 14a engagée dans un évidement annulaire correspondant agencé sur la périphérie du disque 11. La couronne 14 est montée librement rotative autour du disque 11, et porte des manetons 15 en nombre égal au nombre des goujons 5 et des trous associés 6 de la roue, c'est-à-dire quatre manetons dans l'exemple décrit. Ceux-ci sont articulés sur la couronne 14 autour de pivots 16 enfoncés dans ces trous de la couronne, et séparés par des intervalles angulaires égaux de 90 degrés.

Au voisinage de chaque extrémité d'un maneton 15 opposée à son pivot 16, est fixé un goujon 5, les manetons étant reliés au disque central 11 par des moyens d'entraînement réalisés de façon à réserver aux manetons 15 un degré de liberté de mouvement par rapport au disque 11.

Dans l'exemple décrit, ces moyens d'entraînement entre les manetons 15 et le disque 11 sont constitués, pour chaque maneton 15, par une rainure 17 ménagée dans le disque 11 sur la face de celui-ci tournée vers les manetons, donc sous ceux-ci, et complémentairement par un ergot 18 solidaire du maneton correspondant 15 et engagé dans la rainure associée 17. Cette dernière est rectiligne et dans l'exemple décrit, s'étend perpendiculairement au rayon R du disque 11 qui passe par l'ergot 18 logé dans la rainure 17 associée, lorsque cet ergot 18 est en position de repos et au contact d'une butée 19, comme représenté à la figure 1. Cette position correspond à un entraxe minimum entre deux trous consécutifs d'une jante, comme expliqué ci-après.

La rainure ou gorge 17 s'étend de la périphérie du disque 11 jusqu'à un point 17a situé au-delà de l'intersection de cette rainure 17 avec le rayon R précité, comme on le voit sur la figure 1. Par ailleurs, la butée 19, qui est constituée par un pion encastré dans le disque rotatif 11, est positionnée au voisinage de l'extrémité 17a de la rainure 17, afin de limiter le débattement de l'ergot 18 à l'intérieur de la rainure 17 (figure 3). L'ergot 18 peut être réalisé au moyen d'un pion traversant le maneton 15, comme représenté à la figure 3.

Les manetons 15 ainsi que leurs goujons 5 et leurs ergots 18 peuvent occuper des positions angulaires différentes en fonction de la valeur des entraxes E séparant deux trous d'une jante de roue à équilibrer. La position représentée en trait continu à la figure 1 correspond à un entraxe minimum E, tandis que la position du maneton supérieur et de son ergot représentée en traits mixtes, correspond à la valeur extrême maximum de l'entraxe. Dans cette position extrême, l'ergot 18, qui était auparavant en butée contre le pion ou arrêtoir 19, a parcouru pratiquement toute la longueur libre de la rainure 17. Dans cette seconde position extrême, l'ergot 18 est donc au contact de la couronne 14, celle-ci et le disque 11 ayant corrélativement tourné relativement l'un à l'autre de façon à permettre le coulissement de l'ergot 18 dans la rainure 17, tandis que le maneton 15 a exécuté une rotation autour de son pivot 16, comme indiqué par la flèche portée sur la figure 1.

Suivant une particularité de l'invention, l'ergot 18 de chaque maneton est situé du côté de l'axe de rotation X—X du plateau 4, par rapport à une ligne reliant l'axe d'articulation du pivot 16 et le goujon 5 porté par le maneton 15 considéré.

La mise en oeuvre et les avantages du dispositif qui vient d'être décrit sont les suivants.

L'équilibreuse étant au repos, on positionne la roue 1 à équilibrer de façon que ses trous 6 viennent en regard des goujons 5 associés, sur lesquels on enfile la jante 7. On serre ensuite manuellement les écrous 9 sur les goujons, de façon à maintenir la roue 1 sur l'équilibreuse.

Il convient de noter que ces écrous présentent un pourtour moleté 9a pour faciliter leur serrage manuel, ainsi que des portées tronconiques 9b réalisées de façon connue en soi, et qui viennent s'engager dans les trous 6 de la jante. Ces portées peuvent également être sphériques.

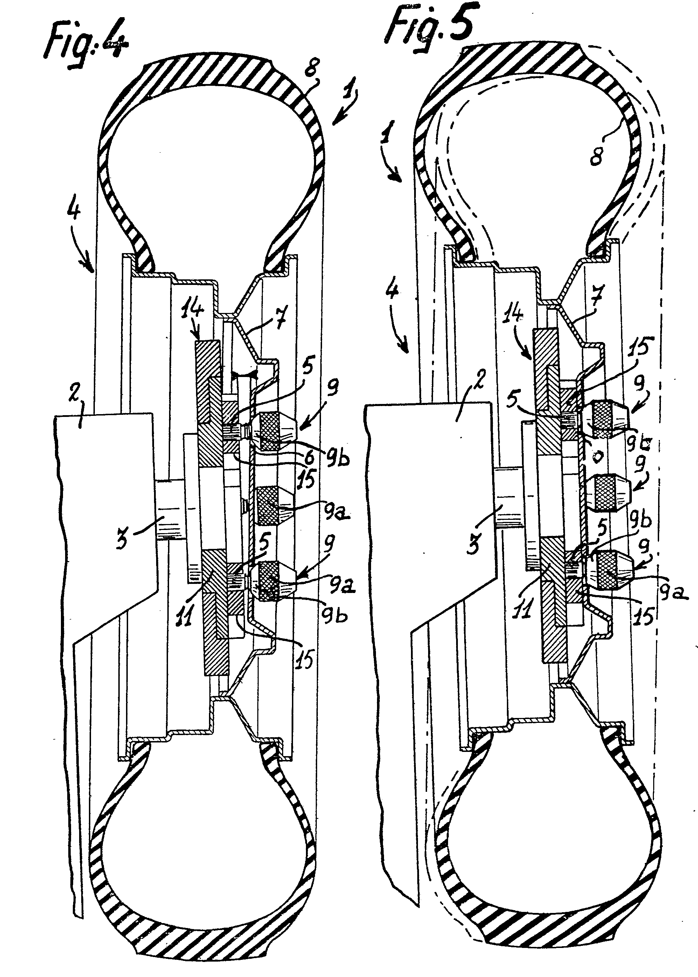

En fin de serrage manuel des écrous 9, la roue 1 n'est pas parfaitement serrée contre le plateau 4, par rapport auquel elle présente une certaine inclinaison, exagérée à dessein sur la figure 4 pour mieux faire comprendre l'effet technique du dispositif selon l'invention.

En fin de serrage manuel, les écrous 9 ne sont donc pas bloqués et n'appliquent pas correctement la jante 7 contre les manetons 15. On met alors en route l'équilibreuse, dont l'arbre rotatif 3 entraîne le disque 11 qui entraîne lui- même à son tour en rotation la couronne 14 et les manetons 15 par l'intermédiaire des ergots 18, ces derniers effectuant alors un déplacement de faible amplitude dans leurs rainures 17.

Corrélativement, les goujons 5 exécutent un déplacement angulaire en même temps que les manetons 15 pivotent légèrement autour de leurs axes d'articulation sur la couronne 14. De ce fait, les écrous 9 viennent bloquer la jante 7 contre les manetons 15, comme représenté à la figure 5, en rattrapant le jeu laissé à la fin du serrage manuel entre la jante et les manetons 15.

Dans ces conditions, la roue 1 est correctement maintenue et bloquée contre le plateau 4 du dispositif selon l'invention, et ce de façon automatique au moment de la mise en route de l'équilibreuse, et pendant toute la durée de la rotation de celle-ci. Ainsi, on obtient simultanément au autoserrage des écrous 9 de fixation qui bloquent la jante 7 sur les manetons 15, et un autocentrage de la roue, qui est donc maintenue en position pendant toute l'opération d'équilibrage.

Le dispositif de fixation selon l'invention est particulièrement avantageux, puisque d'une part il supprime la contrainte d'avoir à serrer des écrous placés sur la face arrière du plateau. D'autre part, les écrous placés sur la face avant peuvent être serrés sans clé, à la main, avec un jeu résiduel entre la roue et les manetons 15, qui est automatiquement rattrapé pendant l'opération d'équilibrage. On supprime ainsi des opérations relativement longues et fastidieuses, de même que des efforts physiques de serrage des écrous à la clé, ce qui raccourcit très sensiblement le temps nécessaire à la mise en place de la roue sur l'équilibreuse.

Ces résultats peuvent s'expliquer de la manière suivante:

La rotation du plateau 4 dans le sens horaire indiquée par la flèche H (figure 1) développe un couple d'autoserrage C obtenu par les deux éléments suivants:

a — Le couple moteur qui engendre une force F1 sur chacun des manetons 15 et applique à ceux-ci un couple C1 tendant à les faire pivoter autour de leurs articulations 16.

b — La force centrifuge qui engendre une force F2 sur chacun des manetons 15 et crée sur ceux-ci un couple C2.

La puissance fournie par le moteur d'entraînement étant constante, on voit que d'une part, au démarrage le couple C1 est prépondérant, et que d'autre part, en vitesse entretenue, ce couple C1 diminue, tandis que le couple C2 augmente et s'ajoute au premier.

Une rotation du disque 11 entraîne le pivotement simultané de chacun des manetons 15, ce qui engendre l'autocentrage de la roue 1. Par ailleurs, par l'intermédiaire des portées coniques 9b des écrous 9, le couple d'autoserrage C permet, comme illustré à la figure 5, et déjà indiqué ci-dessus, de bloquer la jante 7 sur les manetons 15, et de centrer la roue 1, qui est ainsi maintenue en bonne position pendant toute l'opération d'équilibrage.

Après que les mesures correspondant à cette opération sont terminées, le couple de freinage tend à ramener la roue 1 dans sa position représentée à la figure 4, dans laquelle elle présente un certain jeu par rapport à la surface des manetons 15. La roue 7 revient ainsi progressivement vers sa position où le jeu est maximum, qu'elle retrouve à l'arrêt de l'équilibreuse. On peut alors desserrer les écrous 9 manuellement.

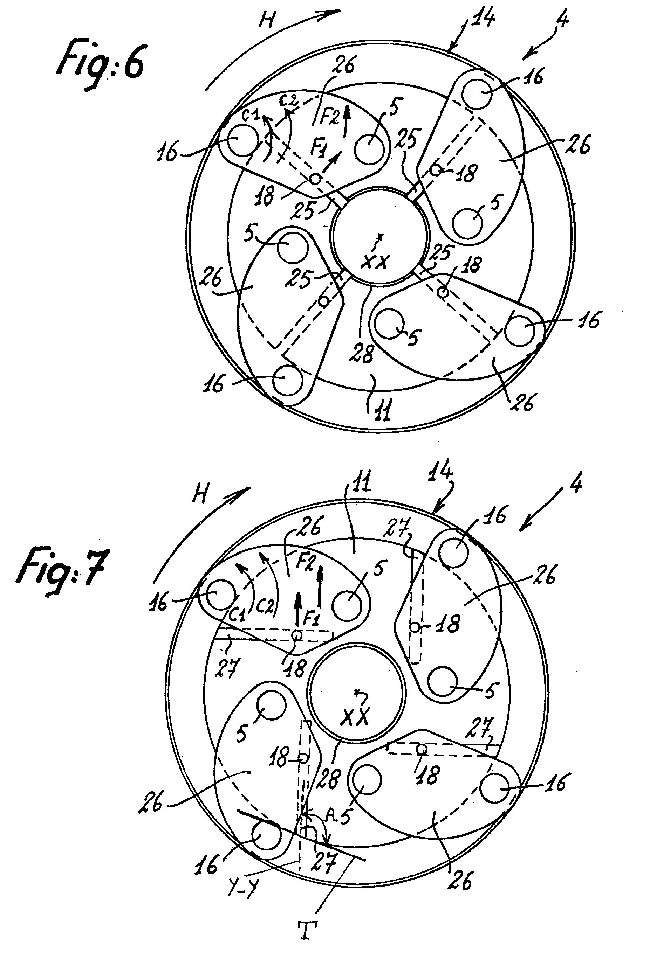

Dans la variante de réalisation illustrée à la figure 6, les rainures 25 sont agencées radialement dans le disque 11, les ergots 18 engagés dans ces rainures coopérant avec les manetons 26.

Dans la réalisation de la figure 7, les axes des rainures 27 recevant les ergots 18 sont tangents à l'alésage 28 percé dans le disque 11 pour recevoir l'arbre d'entraînement 3, l'un des bords de ces rainures étant tangent à cet alésage central 28.

On voit que les rainures ménagées dans le disque 11 peuvent être inclinées d'un angle quelconque par rapport aux tangentes au pourtour extérieur du disque 11, en des points situés sur les axes des rainures, dans la mesure où l'on n'observe pas de coincement gênant la rotation des manetons. Ainsi, dans l'exemple de la figure 7, l'axe Y—Y de chaque rainure 27 est incliné d'un angle A sur la tangente T au point précité.

L'invention n'est pas limitée aux formes d'exécution décrites et peut comporter des variantes de réalisation. En particulier, le plateau du dispositif de fixation peut comporter un nombre variable de manetons et de goujons de fixation correspondant au nombre de trous existants dans la roue à équilibrer.

**Revendications**

1. Dispositif pour la fixation des roues de véhicules sur une équilibreuse pourvue d'un arbre rotatif, comportant un plateau (4) équipé de goujons (5) destinés à s'engager dans la jante (7) de la roue (11) à équilibrer, et des écrous (9) de fixation de la roue (1) adaptés pour être vissés sur les goujons (5), caractérisé en ce que, pour assurer automatiquement un autoserrage des écrous (9) et un autocentrage de la roue (1) après simple serrage manuel des écrous (9) de fixation, et ce sous l'effet de la mise en rotation du plateau (4) de fixation, le plateau (4) comprend un disque (11) coaxial à l'arbre rotatif (3) et solidaire de celui-ci, une couronne (14) entourant le disque (11) et portant des manetons (15) en nombre égal au nombre de goujons (5) et de trous (6) de la roue (1), articulés sur la couronne (14) et aux extrémités de chacun desquels est fixé un goujon (5), les manetons (15) étant reliés au disque central (11) par des moyens d'entraînement réservant à ces manetons (15) un degré de liberté en rotation par rapport au disque (11).

2. Dispositif selon la revendication 1, caractérisé en ce que les moyens de liaison entre les manetons (15) et le disque (11) sont constitués, pour chaque maneton (15), par une rainure (17) ménagée dans le disque (11) sous le maneton correspondant (15), et par un ergot (18) solidaire de ce maneton (15) et engagé dans la rainure (17).

3. Dispositif selon la revendication 2, caractérisé en ce que l'ergot (18) de chaque maneton (15) est situé du côté de l'axe de rotation (X—X) du plateau (4), par rapport à une ligne reliant l'axe d'articulation (16) du maneton (15) sur la couronne (11) et le goujon (5) fixé à ce maneton.

4. Dispositif selon la revendication 2, caractérisé en ce que la rainure (17) est perpendiculaire au rayon (R) du disque (11) qui passe par l'ergot (18) associé, lorsque cet ergot est en position de repos et au contact d'une butée (19) logée dans la rainure (17).

5. Dispositif selon la revendication 2 caractérisé en ce que les rainures (17) sont ménagées radialement dans le disque (11).

6. Dispositif selon la revendication 2, caractérisé en ce que l'un des bords de chaque rainure (27) est tangent à un alésage central (8) recevant l'arbre d'entraînement (3) du plateau (4) (figure 7).

7. Dispositif selon l'une des revendications 1 à 3, caractérisé en ce que l'axe de chaque rainure (17, 25, 27) est incliné d'un angle quelconque, par rapport à la tangente au pourtour extérieur du disque (11) en un point situé sur l'axe de la rainure (17, 25, 27).

## Patentansprüche

1. Vorrichtung zum Fixieren von Fahrzeugrädern auf einer Auswuchtmaschine mit einer umlaufenden Welle und einem daran vorgesehenen Teller (4) der mit in die Felge (7) des auszuwuchtenden Rades eingreifenden Bolzen (5) und mit auf die Bolzen (5) aufschraubbaren Muttern (9) zur Befestigung des Rades (1) ausgestattet ist, dadurch gekennzeichnet, daß zum selbsttätigen Anziehen der Muttern (9) und zum selbsttätigen Zentrieren des Rades (1) nach dem Aufsetzen der Muttern (9) von Hand beim Anlaufenlassen des Befestigungstellers (4) der Teller (4) eine koaxial zur Welle (3) auf dieser befestigte Scheibe (11) aufweist, die von einem Rand (14) umgeben ist, der in gleicher Anzahl wie Bolzen (5) und Bohrungen (6) im Rad (1) vorgesehen sind, Hebel (15) aufweist, die auf dem Rand (14) gelagert sind und an deren Ende jeweils ein Bolzen (5) befestigt ist, wobei die Hebel (15) über Mitnehmereinrichtungen mit der zentralen Scheibe (11) in Verbindung stehen, die den Hebeln (15) gegenüber der Scheibe (11) ein gewisses Maß an Drehfreiheit gewähren.

2. Vorrichtung nach Anspruch 1, dadurch gekennzeichnet, daß die Mitnehmereinrichtungen zwischen den Hebeln (15) und der Scheibe (11) aus einer unter jeden Hebel (15) gelegenen Nut (17) in der Scheibe (11) und einem in die Nut (17) eingreifenden Zapfen (18) an den Hebeln (15) gebildet sind.

3. Vorrichtung nach Anspruch 2, dadurch gekennzeichnet, daß der Zapfen (18) an jedem Hebel (15) außerhalb der Rotationsachse (X—X) des Tellers (4) und außerhalb der Verbindungslinie zwischen dem Lager (16) des Hebels (15) auf dem Rand (14) und dem am Hebel befestigten Bolzen (5) liegt.

4. Vorrichtung nach Anspruch 2, dadurch gekennzeichnet, daß die Nuten (17) senkrecht zum Radius (R) der Scheibe (11) verlaufen, wenn dieser durch die entsprechenden Zapfen (18) führt, wenn dieser in der Ruhelager am Anschlag (19) in der Nut (17) anliegt.

5. Vorrichtung nach Anspruch 2, dadurch gekennzeichnet, daß die Nuten (25) in der Scheibe (11) radial angeordnet sind.

6. Vorrichtung nach Anspruch 2, dadurch gekennzeichnet, daß eine Kante der Nuten (27) tangential zu der die Antriebsachse (3) des Tellers (4) aufnehmenden Mittelbohrung (28) verläuft (Fig. 7).

7. Vorrichtung nach Anspruch 1 bis 3, dadurch gekennzeichnet, daß die Achse jeder Nut (17, 25, 27) in einem beliebigen Winkel zur Tangente an dem Außenrand der Scheibe (11) um einen auf der Achse der Nut (17, 25, 27) gelegenen Punkt geneigt sein kann.

## Claims

1. Device for attaching vehicle wheels to a balancing machine provided with a rotary shaft, comprising a mounting-plate (4) equipped with wheel-studs (5) which are intended to engage in the rim (7) of the wheel (11) to be balanced, and nuts (9) for attaching the wheel (1) which are adapted to be screwed on the wheel-studs (5), characterized in that, in order to ensure automatic self-tightening of the nuts (9) and self-centering of the wheel (1) after simply screwing-up the attachment nuts (9) by hand, this being achieved by setting the mounting-plate (4) in rotation, the mounting-plate (4) comprises a disk (11) which is coaxial with the rotary shaft (3) and rigidly fixed to this latter, a ring (14) surrounding the disk (11) and carrying crank-plates (15) which are equal in number to the number of wheel-studs (5) and of holes (6) of the wheel (1), which are pivotally mounted on the ring (14) and at each end of which is fixed a wheel-stud (5), the crank-plates (15) being coupled to the central disk (11) by driving means which provide these crank-plates (15) with one degree of freedom of rotation with respect to the disk (11).

2. Device in accordance with claim 1, characterized in that the means providing a coupling between the crank-plates (15) and the disk (11) are constituted in the case of each crank-plate (15) by a groove (17) formed in the disk (11) beneath the corresponding crank-plate (15) and by a drive-stud (18) rigidly fixed to this crank-plate (15) and engaged in the groove (17).

3. Device in accordance with claim 2, characterized in that the drive-stud (18) of each crank-plate (15) is located nearest the axis of rotation (X—X) of the mounting-plate (4) with respect to a line connecting the axis of pivotal displacement (16) of the crank-plate (15) on the ring (11) and the wheel-stud (5) which is attached to this crank-plate.

4. Device in accordance with claim 2, characterized in that the groove (17) is perpendicular to the radius (R) of the disk (11) which passes through the associated drive-stud (18) when this stud is in the rest position and in contact with a stop (19) fitted within the groove (17).

5. Device in accordance with claim 2, characterized in that the grooves (17) are formed radially in the disk (11).

6. Device in accordance with claim 2, characterized in that one of the edges of each groove (27) is tangent to a central bore (8) which receives the drive shaft (3) of the mounting-plate (4) (figure 7).

7. Device in accordance with any one of claims 1 to 3, characterized in that the axis of each groove (17, 25, 27) is inclined at any desired angle with respect to the tangent to the external periphery of the disk (11) at a point located on the axis of the groove (17, 25, 27).

# Fig. 1

*Fig. 2*

**Fig. 3**

0014138

Fig.4    Fig.5

Fig:6

Fig:7